# EUROPEAN PATENT SPECIFICATION

(11) **EP 0 508 529 B1**
(45) Date of publication and mention of the grant of the patent: **26.06.1996**
(21) Application number: 92200938.6
(22) Date of filing: 02.04.1992
(51) Int. Cl.: A23G 9/02, A23G 9/04

(54) **Frozen confection product**
Gefrorenes Konfekt
Produit de confiserie congelé

(30) Priority: 12.04.1991 GB 9107835
(43) Date of publication of application: 14.10.1992
(73) Proprietor: UNILEVER N.V., NL-3013 AL Rotterdam (NL); UNILEVER PLC, London EC4P 4BQ (GB)
(72) Inventor: Bracey, John Douglas, Unilever Research Colworth, Sharnbrook, Bedford (GB); Dyks, Stephen John, Unilever Research Colworth, Sharnbrook, Bedford (GB); Sztehlo, Andrew, Unilever Research Colworth, Sharnbrook, Bedford (GB)
(74) Representative: Kirsch, Susan Edith

(56) References cited:
- GB-A- 1 599 272
- US-A- 3 619 205
- US-A- 4 021 583
- US-A- 4 826 656
- US-A- 4 832 976

## Description

The invention relates to a frozen confection product without any appreciable overrun, e.g. below 20%, and in particular without overrun and to a method of manufacturing it.

Frozen confection products without appreciable overrun, particularly in hot climates and other warm environments, often suffer the problem of a high melting rate, resulting in molten material leaking off the products thereby soiling the hands, clothes etc. of the consumer. This is in particular true for low fat frozen confections, comprising up to 8 to 10% of fat, like water ice and ice milk and especially for fat free products, in practice comprising up to 0.5% of fat. For a definition of "water ice" and "ice milk" may be referred to well known handbooks on frozen desserts such as "Ice Cream" by W. S. Arbuckle.

US 4 021 583 (Arden) describes a quiescently frozen fat free fruit water ice product which has increased resistance to melting compared to previously known water-ices and increased protection against stickiness in storage.

US 4 832 976 (Griffin et al) discloses a low-solids, non-aerated, quiescently-frozen confection having a soft, non-brittle texture without a gummy texture and which does not exhibit a squeak characteristic when the product is bitten into. The benefits are derived from a combination of maltodextrin, glycerin and gelatin.

It is an object of the invention to provide frozen confection products and a method of manufacture of these products having an acceptable melting rate without including an undue amount of additives like thickeners whereby the taste or other organoleptic properties, such as mouth feel and texture properties would be deteriorated.

To that end the invention provides a method of manufacturing a frozen confection product without any appreciable overrun wherein an ice mix comprising up to 10% fat and preferably from 0 to 0.5% fat and comprising 0.2 to 0.5% of overrun restricting stabilizer such as locust bean gum is slush frozen and thereafter frozen hard to a usual storage temperature, which is in practice between -20°C and -40°C but usually is about -30°C. In a preferred embodiment from 0.2 to 0.4% of stabilizer is used. Optimal results are obtained if the stabilizer is at least predominantly composed of locust bean gum (LBG), although smaller amounts of other stabilizers, in particular those for water ices and sherbets, usually do not harm.

The invention also provides a frozen confection product without any appreciable overrun, e.g. below 20%, and in particular without overrun, having a melt down rate of at most 0.175 g/min between 4 and 24% overall weight loss and a total weight loss of 30 to 80%, determined with a cylindrical sample of 2.5 cm diameter weighing 10 g, equilibrated at -20°C and exposed to an ambient temperature of 18 to 20°C while supported on a horizontal steel wire netting of 2.5 x 2.5 mm mesh size. For optimum taste and other organoleptic and texture properties a total weight loss between 50 and 80% is preferred.
For the same reason an amount of stabilizer not exceeding 0.5% and in particular being comprised between 0.2 and 0.4% is to be preferred. Best results are obtained if the stabilizer is at least predominantly composed of LBG (locust bean gum).

The invention will be exemplified in the following description of some embodiments which are at present to be preferred. Parts and percentages are by weight in this specification and claims and refer to the total amount of ice mix, unless otherwise indicated.

### Example I

A water ice mix consisting of
- 12%: sucrose
- 3.5%: fructose
- 0.6%: citric acid
- .25%: LBG
- 16%: lemon juice (1x concentrated)
- .08%: flavour
- 67.57%: water
is frozen to a temperature fluctuating between -4.0° and -4.2°C in a usual scraped surface heat exchanger to form a partly frozen thick slush. This slush is filled into a cylindrical mould of 2.5 cm diameter to form 50 gram portions which are frozen hard to a storage temperature of -30°C.

For determining the melt down properties a 10 g sample is cut from a portion and equilibrated for 24 hours at - 20°C. Thereafter this sample is put on a horizontal steel wire netting of 2.5 x 2.5 mm mesh size at an ambient temperature of 18° to 20°C. Molten product leaking off the sample is continuously monitored using a recording balance. The times at which weight losses of 0.4 g and 2.4 g are reached are recorded, being after 25 min and 40 min respectively. Therefrom a melt down rate of 0.14 g/min may be calculated. After 90 min no fluid dripped off the sample any more, indicative of an equilibrium state, at which a weight loss of 60.3% was recorded.

### Examples II to IV

The procedure of Example I was repeated with the following differences:

| Example | initial freezing temp. °C | % LBG | melt down rate g/min | total loss % |
|---|---|---|---|---|
| II | -4.0 to -4.3 | .35 | 0.10 | 54.5 |
| III | -3.8 to -4.1 | .45 | 0.07 | 65.4 |
| IV | -2.2 to -2.3 | .45 | 0.05 | 55.5 |

## Claims

1. A method of manufacturing frozen confection products having less than 20% overrun having a meltdown rate of at most 0.175% g/min, between 4% and 24% overall weight loss and a total weight loss of 30% to 80%, determined with a cylindrical sample of 2.5 cm diameter weighing 10g, equilibrated at -20°C and exposed to an ambient temperature of 18 to 20°C while supported on a horizontal steel wire netting of 2.5 x 2.5 mm mesh size; wherein i) an ice mix comprising up to 10% of fat and a stabiliser which is predominantly locust bean gum is slush frozen, and ii) thereafter frozen hard.

2. a method according to any claim 1 wherein the product comprises 0% to 0.5% fat.

3. A method according to claim 1 or 2 wherein the stabiliser is present in the ice mix in an amount of up to 0.5%.

4. A method according to any preceding claim wherein the stabiliser is present in the ice mix in an amount of from 0.2% to 0.5%.

5. A method according to any preceding claim wherein the total weight loss is 50% to 80%.

6. A method according to any preceding claim wherein the slush frozen material is transferred to a mould before being frozen hard.

## Patentansprüche

1. Verfahren zur Herstellung gefrorener Konfekt-Produkte mit weniger als 20 % Lufteinschlag und einer Schmelzrate von höchstens 0,175 g/min, einem allgemeinen Masseverlust zwischen 4 % und 24 % und einem gesamten Masseverlust von 30 % bis 80 %, bestimmt mit einer zylindrischen Probe mit einem Durchmesser von 2,5 cm und einer Masse von 10 g, äquilibriert bei -20°C und ausgesetzt an eine Umgebungstemperatur von 18 bis 20°C, während sie auf einem horizontalen Stahldrahtnetz mit einer Mesh-Größe von 2,5 x 2,5 mm getragen wird; bei welchem i) eine Eismischung, umfassend bis zu 10 % Fett und einen Stabilisator, der hauptsächlich Johannisbrot-Gummi ist, zu einer Creme gefroren wird, und (ii) anschließend hartgefroren wird.

2. Verfahren nach Anspruch 1, wobei das Produkt 0 % bis 0,5 % Fett umfaßt.

3. Verfahren nach Anspruch 1 oder 2, wobei der Stabilisator in der Eismischung in einer Menge von bis zu 0,5 % vorliegt.

4. Verfahren nach einem der vorhergehenden Ansprüche, wobei der Stabilisator in der Eismischung in einer Menge von 0,2 % bis 0,5 % vorliegt.

5. Verfahren nach nach einem der vorhergehenden Ansprüche, wobei der gesamte Masseverlust 50 % bis 80 % beträgt.

6. Verfahren nach nach einem der vorhergehenden Ansprüche, bei welchem das zu einer Creme gefrorene Material zu einer Form transferiert wird, bevor es hartgefroren wird.

## Revendications

1. Procédé de fabrication de produits de confiserie congelés ayant moins de 20% de débordement, ayant un taux de fusion d'au plus 0,175 g/min., entre 4 et 24% de perte de poids globale et une perte de poids totale de 30 à 80%, déterminée avec un échantillon cylindrique de 2,5 cm de diamètre pesant 10 g, équilibré à -20°C et exposé à une température ambiante de 18 à 20°C tout en étant supporté sur un filet d'acier d'une dimension de maille de 2,5x2,5 mm ; dans lequel i) un mélange glacé comprenant jusqu'à 10% de graisse et un stabilisant qui, de façon prédominante, est la gomme de caroube est congelé en masse fondue et ii) ensuite congelé fortement.

2. Procédé selon la revendication 1, dans lequel le produit comprend de 0 à 0,5% de graisse.

3. Procédé selon la revendication 1 ou 2, dans lequel le stabilisant est présent dans le mélange glacé en une quantité jusqu'à 0,5%.

4. Procédé selon l'une quelconque des revendications précédentes, dans lequel le stabilisant est présent dans le mélange glacé en une quantité de 0,2 à 0,5%.

5. Procédé selon l'une quelconque des revendications précédentes, dans lequel la perte de poids totale est de 50 à 80%.

6. Procédé selon l'une quelconque des revendications précédentes, dans lequel la matière congelée en masse fondue est transférée à un moule avant d'être congelée fortement.
